Europäisches Patentamt

European Patent Office

Office européen des brevets

(11) Veröffentlichungsnummer: **0 305 629 B1**

# EUROPÄISCHE PATENTSCHRIFT

(45) Veröffentlichungstag der Patentschrift:
27.03.91 Patentblatt 91/13

(51) Int. Cl.$^5$: **A01K 41/00**

(21) Anmeldenummer: **88100157.2**

(22) Anmeldetag: **16.05.84**

(54) **Schlupfbrüter für eine Kükenbrutanlage.**

(30) Priorität: **09.06.83 DE 3320815**

(43) Veröffentlichungstag der Anmeldung:
**08.03.89 Patentblatt 89/10**

(45) Bekanntmachung des Hinweises auf die
Patenterteilung:
**27.03.91 Patentblatt 91/13**

(84) Benannte Vertragsstaaten:
**AT BE CH DE FR GB IT LI NL SE**

(56) Entgegenhaltungen:
**DE-A- 944 825**
**US-A- 2 997 021**

(61) Veröffentlichungsnummer der früheren
Anmeldung nach Art. 76 EPü: **0128387**

(73) Patentinhaber: **A.J. Wormgoor B.V.**
**Steenmorsweg 4-6**
**NL-7478 PM Diepenheim (NL)**

(72) Erfinder: **Wormgoor, Arend Jan**
**Steenmorsweg 4-6**
**NL-7478 PM Diepenheim (NL)**

(74) Vertreter: **Habbel, Hans-Georg, Dipl.-Ing.**
**Postfach 3429 Am Kanonengraben 11**
**W-4400 Münster (DE)**

## Beschreibung

Die Erfindung bezieht sich auf einen Schlupfbrüter für eine Kükenbrutanlage gemäß dem Oberbegriff des Patentanspruches 1.

Schlupfbrüter bestehen heute üblicherweise aus einer Ofenkammer, die wärmeisoliert ausgebildet ist und in die Schlupfbrüterwagen eingefahren werden können, die Horden oder Borde aufnehmen, auf denen die Eier angeordnet sind, die in einer Brutanlage vorgebrütet sind. Im Schlupfbrüter werden diese Eier innerhalb kürzester Zeit so weiter wärmebehandelt, daß die Küken schlüpfen.

Bei den beispielsweise aus der US-A-29 97 021 bekannten Anordnungen werden die gesamten Wagen in den Ofen eingefahren, verbleiben dann stationär im Ofen, bis die Küken des Wagens geschlüpft sind. Anschließend werden die Wagen aus der Ofenkammer entnommen und die sich auf dem Wagen befindenden Küken abgenommen und der weiteren Bearbeitung zugeführt.

Bei einem solchen System erfordert das Entnehmen der Küken vom Wagen einen hohen Arbeitsanteil. Außerdem ist es erforderlich, daß dann, wenn die Wagen mit neuen Eiern beschickt sind, die Wagen im Schlupfbrüter wieder aufgeheizt werden müssen, so daß hier erhebliche Wärmeverluste entstehen. Das Entnehmen der Küken von den Wagen ist eine aufwendige Handarbeit. Die Belüftung der Horden des Wagens beim Entnehmen der Küken bereitet Schwierigkeiten, worunter die Küken zu leiden haben.

Der Erfindung liegt die Aufgabe zugrunde, einen Schlupfbrüterofen der eingangs genannten Art so zu gestalten, daß einerseits ein besserer Wärmehaushalt und eine bessere Belüftung erreichbar sind und daß andererseits gleichzeitig die bisher erforderliche aufwendige Handarbeit in großem Umfang vermieden wird.

Diese Aufgabe wird durch die Merkmale des kennzeichnenden Teiles des Patentanspruches 1 gelöst.

Im Unterschied zu den zum Stand der Technik gehörenden Schlupfbrütern ist der Schlupfbrüterwagen innerhalb der Ofenkammer in deren Längsachse hin und her fahrbar. Auf dem Schlupfbrüterwagen befinden sich übereinander angeordnet eine Vielzahl von Förderbändern, auf die die Eier aufgelegt werden, aus denen die Küken schlüpfen sollen. Der Wagen wird dann während der Zeit, in der der Brutvorgang vollendet wird, hin und her in der Ofenkammer verfahren.

Dadurch, daß die Eier auf Förderbändern angeordnet sind, ist es möglich, daß, sobald der Schlupfvorgang erfolgt ist, nunmehr das Förderband, das mit den Küken besetzt ist, in Tätigkeit gesetzt wird und dabei die Küken am Ende des Förderbandes abgegeben werden, beispielsweise in eine entsprechende Aufnahmestation oder direkt hier in diesem Bereich von Hand abgenommen werden. Bei dieser Abgabe der ausgebrüteten Küken verbleiben die restlichen Eier und Küken in dem warmen Schlupfbrüter bzw. in der warmen Ofenkammer, und es erfolgt hier keine Unterbrechung des Brutvorganges und eine weitere Belüftung der bereits geschlüpften Tiere.

Gemäß einer weiteren wesentlichen Ausgestaltung der Erfindung ist vorgesehen, daß der Schlupfbrüterwagen längs seines Fahrweges innerhalb der Ofenkammer von einem tunnelförmigen Mantel aus gut wärmeleitenden Blechen od. dgl. umgeben ist. Der zwischen dem Mantel und der Ofenkammerwand gebildete Raum ist ein Pufferraum, der Temperaturunterschiede auszugleichen vermag, so daß im eigentlichen Schlupfbrüterofen innerhalb des Mantels nur geringfügige Temperaturregelmaßnahmen erforderlich sind.

Dadurch, daß gemäß einer weiteren Ausgestaltung der Erfindung beiderseits des Fahrweges des Schlupfbrüterwagens innerhalb des Mantels Ventilatoren zur Zuführung der Luft angeordnet sind, wird sichergestellt, daß nicht nur jedem Ei eine ausreichende Sauerstoff- und Wärmezufuhr zugeführt wird, sondern gleichzeitig kann auch das durch das bisher häufig erforderliche Oberbelüften der Eier oder Etagen ein Austrocknen der Eier verhindert werden, d.h. der Feuchtigkeitsgehalt der Luft und der Eier kann besser gesteuert werden.

Nachfolgend ist die Erfindung anhand eines in der Zeichnung dargestellten Ausführungsbeispieles näher erläutert. Die Zeichnung zeigt dabei in

Fig. 1 einen Schlupfbrüter in Seitenansicht, teilweise geschnitten, in

Fig. 2 eine Draufsicht auf den Schlupfbrüter gemäß Fig. 1 und in

Fig. 3 einen Querschnitt durch den Schlupfbrüter gemäß Fig. 1 und 2.

In der Zeichnung trägt der Schlupfbrüter das Bezugszeichen 20. Er weist einen Schlupfbrüterwagen 21 auf, der innerhalb eines Schlupfbrüterofens 25 verfahrbar ist. Der Schlupfbrüterofen 25 ist in einer Ofenkammer 22 angeordnet. Der Schlupfbrüterwagen 21 weist eine Vielzahl von übereinander angeordneten, über die ganze Länge des Schlupfbrüterwagens durchlaufende antreibbare Förderbänder 23 auf, die die im Vorbrüter gebrüteten Eier aufnehmen können bzw. auf die die im Vorbrüter gebrüteten Eier aufgegeben werden, die dann auf dem Schlupfbrüterwagen 21 zum Ausschlüpfen der Küken geführt werden.

Beiderseits des Schlupfbrüterwagens 21 sind der Bewegung der Warmluft dienende Ventilatoren 24 angeordnet, die die gewünschte Temperatur innerhalb des Schlupfbrüterofens 25 aufrechterhalten und für eine gute Sauerstoffzufuhr Sorge tragen.

Der Schlupfbrüterofen 25 bildet eine eigene Kammer innerhalb der Ofenkammer 22, wobei die Trennung zwischen dem Innenraum der Ofenkammer 22 und dem Innenraum des Schlupfbrüterofens 25 durch einen Mantel 26 erfolgt, der aus gut wärmeleitendem Werkstoff besteht, so daß das Innere der Ofenkammer 22 außerhalb des Schlupfbrüterofens 25 bzw. des Mantels 26 wie ein Wärmepuffer wirkt, der die Steuerung des Wärmehaushaltes innerhalb des Schlupfbrüterofens 25 erleichtert und verfeinert.

Der Schlupfbrüterwagen ermöglicht ein individuelles Beschicken der einzelnen Förderbänder 23 · mit Eiern, so daß ein guter und wirtschaftlicher Temperaturhaushalt gewährleistet wird und außerdem jeweils die Küken eines Bandes entnommen werden können, ohne daß dadurch der Brutvorgang bzw. die Belüftung der auf den anderen Bändern befindlichen Tiere oder Eier unterbrochen wird.

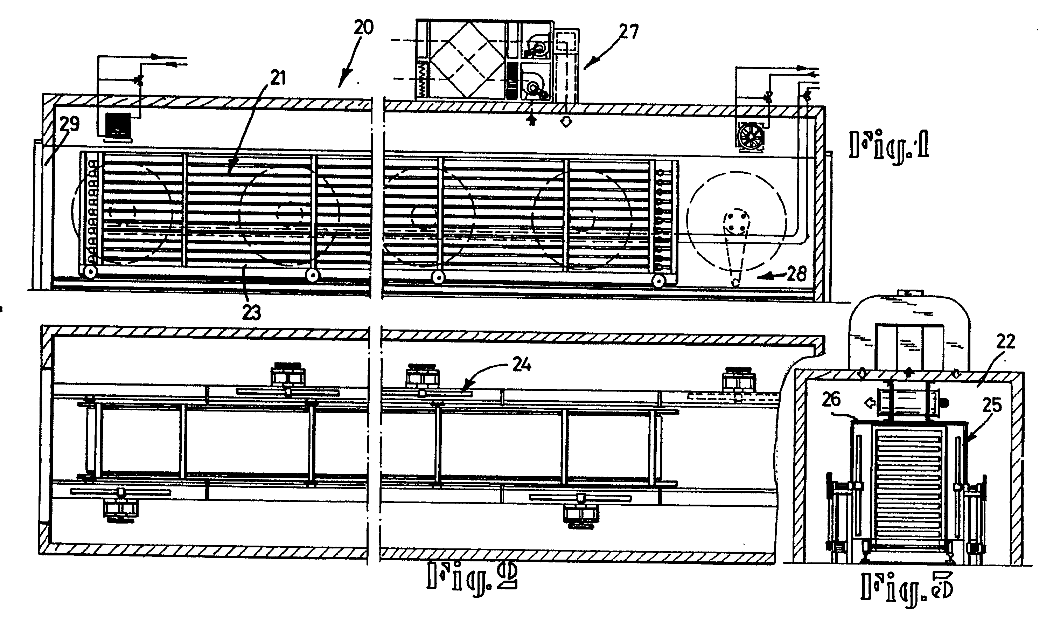

Oberhalb der eigentlichen Ofenkammer 22 ist in Fig. 1 eine Wärmerückgewinnungsanlage 27 dargestellt, und in den Fig. 1 bis 3 sind mit vollen Pfeilen die Abluft- und mit hohlen Pfeilen die Warmluftströme eingezeichnet.

Bei 29 ist eine Ofenöffnung in der Ofenkammer 22 dargestellt, von der aus die Förderbänder 23 des Schlupfbrüterwagens 21 beschickt und entleert werden können. Es ist ersichtlich, daß bei Beschicken und Entleeren des einen oder anderen Förderbandes 23 die weiteren Förderbänder stillstehen bleiben können und dabei der Brutvorgang nicht unterbrochen werden muß.

In Fig. 1 ist weiterhin gestrichelt bei 28 der Antrieb für den Schlupfbrüterwagen 21 dargestellt, wobei sich der Wagen 21 so vor den Ventilatoren 24 hin- und herbewegt, daß stets die Gesamtlänge des Wagens 1 mit Luft versorgt wird, d.h. also, das Verfahren des Wagens 1 erfolgt über die Länge des Ventilatorbereiches, so daß eine gute abwechselnde Belüftung der Eier erfolgt.

## Ansprüche

1. Schlupfbrüter für eine Kükenbrutanlage mit einer wärmeisolierten, langgestreckten Ofenkammer (22) zur Aufnahme der die Eier tragenden Borde, welche in einem fahrbaren Schlupfbrüterwagen (21) angeordnet sind, dadurch gekennzeichnet, daß die Länge der Ofenkammer (22) die Länge des Schlupfbrüterwagens (21) wesentlich übersteigt und der Schlupfbrüterwagen (21) innerhalb der Ofenkammer (22) in deren Längsachse hin und her fahrbar ist und daß auf dem Schlupfbrüterwagen (21) die Borde von umlaufend antreibbaren Förderbändern (23) gebildet sind.

2. Schlupfbrüter nach Anspruch 1, dadurch gekennzeichnet, daß der Schlupfbrüterwagen (21) längs seines Fahrweges innerhalb der Ofenkammer (22) von einem tunnelförmigen Mantel (26) aus gut wärmeleitenden Blechen od. dgl. umgeben ist.

3. Schlupfbrüter nach Anspruch 2 mit zur Luftumwälzung dienenden Ventilatoren (24), dadurch gekennzeichnet, daß die Ventilatoren (24) beiderseits des Fahrweges des Schlupfbrüterwagens (21) innerhalb des Mantels (26) angeordnet sind.

4. Schlupfbrüter nach Anspruch 3, dadurch gekennzeichnet, daß die sich beiderseits des Fahrweges einander gegenüberliegende Ventilatoren (24) auf Lücke zueinander angeordnet sind.

## Claims

1. A hatching incubator for a chicken incubating installation, comprising a thermally insulated, elongate oven chamber (22) for accommodating the egg-carrying shelves, which are arranged in a portable hatching incubator carriage (21), characterized in that the length of the oven chamber (22) substantially exceeds the length of the hatching incubator carriage (21) and in that the hatching incubator carriage (21) can be moved to and fro inside the oven chamber (22) along the longitudinal axis thereof and in that on the hatching incubator carriage (21) the shelves are formed of rotatably drivable conveyor belts (23).

2. A hatching incubator according to claim 1, characterized in that the hatching incubator carriage (21) is surrounded along its travel path inside the oven chamber (22) by a tunnel-shaped jacket (26) of good heat-conducting sheets or the like.

3. A hatching incubator according to claim 2, comprising fans (24) serving to circulate the air, characterized in that the fans (24) are arranged on both sides of the travel path of the hatching incubator carriage (21) inside the jacket (26).

4. A hatching incubator according to claim 3, characterized in that the fans (24) lying opposite each other on both sides of the travel path are in a staggered arrangement.

## Revendications

1. Couveuse d'éclosion pour une installation d'incubation de poussins avec une chambre d'étuve (22) calorifugée, allongée pour accueillir les lisières portant les oeufs, lesquelles sont disposées dans un chariot de couveuse d'éclosion roulant (21), caractérisée en ce que la longueur de la chambre d'étuve (22) dépasse essentiellement la longueur du chariot de couveuse d'éclosion (21) et en ce que le chariot de couveuse d'éclosion (21) est mobile en va-et-vient à l'intérieur de la chambre d'étuve (22) sur l'axe longitudinal de celle-ci et que sur le chariot de couveuse d'éclosion (21) les lisières sont formées de courroies de transport (23) pouvant être entraînées en rotation.

2. Couveuse d'éclosion selon la revendication 1, caractérisée en ce que le chariot de couveuse d'éclosion (21) est entouré le long de son trajet à l'intérieur de la chambre d'étuve (22) par une enveloppe (26) en forme de tunnel en tôles bien conductrices de la chaleur ou similaires.

3. Couveuse d'éclosion selon la revendication 2 avec des ventilateurs (24) servant à la circulation de l'air, caractérisée en ce que les ventilateurs (24) sont disposés des deux côtés du trajet du chariot de couveuse d'éclosion (21) à l'intérieur de l'enveloppe (26).

4. Couveuse d'éclosion selon la revendication 3, caractérisée en ce que les ventilateurs (24) se faisant face des deux côtés du trajet sont disposés en quinconce.

Fig. 1

Fig. 2

Fig. 3